# FASCICULE DE BREVET EUROPEEN

(11) **EP 2 403 195 B1**
(45) Date de publication et mention de la délivrance du brevet: **02.08.2017**
(21) Numéro de dépôt: 11172058.7
(22) Date de dépôt: 30.06.2011
(51) Int. Cl.: H04L 12/801, H04L 12/853, H04L 12/807

(54) **Procédé et dispositif de chargement de contenu visant à réduire la bande passante lors de transferts de données**
Verfahren und Vorrichtung zum Laden von Inhalten zur Reduzierung der Bandbreite beim Datentransfer
Method and device for loading content intended for reducing bandwidth during data transfers

(30) Priorité: 30.06.2010 FR 1002744
(43) Date de publication de la demande: 04.01.2012
(73) Titulaire: Orange, 75015 Paris (FR)
(72) Inventeur: Plissonneau, Louis, 06600 ANTIBES (FR)
(74) Mandataire: Regimbeau

(56) Documents cités:
- EP-A1- 2 104 282
- WO-A1-02/052427

## Description

La présente invention se rapporte plus particulièrement à un procédé et à un dispositif de chargement de contenu visant à réduire la bande passante lors de transferts de données.

Le trafic de données de type « *streaming* » est aujourd'hui très répandu. Une grande part du volume de données transférées sur le réseau Internet est de type « *streaming* »*.* De nombreux logiciels permettant de visionner ou d'écouter un contenu fonctionnent en *« streaming TCP (Transmission Control Protocol) »*. Parmi ces logiciels, on trouve par exemple YouTube, DailyMotion ou encore Deezer (marques déposées).

Ces logiciels fonctionnent au moyen d'une application de lecture ou *« player »* chargé dans une page Web. Cette application de lecture transfère le contenu depuis un serveur distant et lit ensuite le contenu pour l'utilisateur.

Cette application de lecture fonctionne comme suit : elle remplit d'abord une mémoire tampon ou « *playback buffer* » de quelques secondes, puis, une fois cette mémoire tampon remplie, la lecture du contenu démarre pendant que le transfert de données se poursuit en tâche de fond. Le rôle de cette mémoire tampon est de ne pas interrompre la lecture du contenu en cas de perturbations de la réception du contenu, par exemple s'il y a des pertes ou des délais dans le réseau.

Un grand nombre de flux sont interrompus avant la fin du téléchargement et indépendamment des conditions de réseaux (délai et débit). En réalité, des études ont démontré que, bien souvent, les utilisateurs changent de contenu selon l'intérêt qu'ils portent au contenu, et non pas en fonction de la qualité du transfert.

Ces interruptions sont très fréquentes dans les trente premières secondes suivant le début du contenu : l'utilisateur essaie plusieurs contenus avant de choisir celui qui lui convient.

Le transfert du contenu est effectué au moyen d'un protocole de communication, par exemple le protocole TCP *(Transmission Control Protocol*)*.*

Le protocole de communication tente de sonder la capacité du lien entre l'utilisateur et le serveur afin d'obtenir le plus grand débit possible.

Avec des utilisateurs de réseaux à très haut débit, les téléchargements sont très rapides. Si un utilisateur d'un tel réseau n'est pas intéressé par un contenu après un court laps de temps, par exemple dix secondes, il a déjà transféré plusieurs minutes de contenu.

Un utilisateur choisit un contenu qu'il souhaite lire (visualiser dans le cas d'un contenu vidéo et écouter dans le cas d'un contenu audio). Une application de lecture ou *« player »* lance alors un téléchargement depuis un serveur de contenu distant.

Ensuite, le serveur de contenu envoie du contenu vers le dispositif de communication qu'utilise l'utilisateur. Le contenu est transmis sous forme de paquets.

Les paquets sont réceptionnés au niveau du dispositif de communication utilisé par l'utilisateur dans une mémoire tampon de réception.

L'application de lecture réceptionne les paquets dans la mémoire tampon de réception dès leur arrivée et remplit une autre mémoire tampon, liée à l'application de lecture, avant de commencer la lecture.

Une fois que cette seconde mémoire tampon est remplie, la lecture commence et cette seconde mémoire tampon continue de se remplir avec les paquets provenant de la mémoire tampon de réception.

De façon connue, l'application réceptionne les paquets lorsqu'ils arrivent dans la mémoire tampon de réception en effectuant une opération de lecture (« *read* ») qui libère alors de l'espace dans la mémoire tampon de réception. En général, l'application de lecture possède une mémoire tampon de taille suffisamment grande pour ne pas laisser de paquets dans la mémoire tampon de réception.

L'art antérieur connaît, par la demande de brevet PCT N° WO 2006/096823 (EG Technology Inc), un système et des techniques de communication pour une transmission de la source à la destination. Ce document décrit un système et un procédé pour transmettre et présenter des signaux d'information numérique en « *streaming ».* Il est proposé d'optimiser la performance en termes de débit, délai, contraintes au niveau de la mémoire tampon de réception et tolérance aux pertes et à la gigue. Le procédé permet l'ordonnancement de paquets d'information sur la base d'une priorité associée à chacun des paquets, la gestion du flux des paquets à l'intérieur et à l'extérieur de la mémoire tampon, l'ajustement du débit auquel les paquets sont fournis au médium de communication, et la transmission et retransmission des paquets lorsque cela est nécessaire.

La demande de brevet WO 02/52 427 propose quant à elle la limitation du transfert de données d'un émetteur vers un récepteur par le maintien d'un niveau d'occupation élevé du tampon de réception en régulant le débit de lecture des données en sortie du tampon de réception.

Dans ce contexte, la présente invention concerne un procédé de chargement d'un contenu pour une application mise en oeuvre par un dispositif client, comprenant les étapes suivantes :
- publication, conformément à un protocole de communication utilisé pour la transmission desdites données du contenu vers le dispositif client, d'une taille de fenêtre de réception définissant la taille d'une partie d'une mémoire tampon de réception qui est disponible pour la réception de données;
- réception de données du contenu dans la mémoire tampon de réception du dispositif client ;
- transfert de données du contenu réceptionnées dans la mémoire tampon de réception du dispositif client vers une mémoire tampon de l'application ;
caractérisé en ce qu'au moins une partie des données du contenu de la mémoire tampon de réception du dispositif client est transférée vers la mémoire tampon de l'application sans libérer la partie correspondante de la mémoire tampon de réception.

Ainsi, la mémoire tampon de réception reste remplie. Du fait des mécanismes du protocole de communication utilisant des fenêtres de réception, cela ne provoque pas d'émission de flux de données. Grâce au procédé selon la présente invention, la bande passante est régulée et on évite ainsi des transferts de données potentiellement inutiles. De substantielles économies en matière de bande passante sont réalisées.

De plus, la régulation de la consommation en bande passante est effectuée au niveau du récepteur, et non au niveau de l'émetteur, et celle-ci s'effectue par une gestion de l'accès à la mémoire tampon de réception du dispositif récepteur.

Grâce au transfert sans libération de la mémoire, le maintien d'un niveau d'occupation de la mémoire tampon de réception ne se fait toutefois pas au détriment du transfert des données vers la mémoire tampon de l'application et cette dernière bénéficie donc des données sans retard.

On peut prévoir également en pratique une étape de restitution du contenu par l'application.

Selon un mode de réalisation, la taille de la fenêtre de réception publiée reste inférieure à un seuil prédéterminé, en particulier pendant la restitution.

Ce seuil permet ainsi de réguler la bande passante.

Selon un mode de réalisation :
- avant de commencer la restitution, l'application remplit une fraction prédéterminée de la mémoire tampon de l'application avec des données de la mémoire tampon de réception sans libérer la partie correspondante de la mémoire tampon de réception,
- puis, pendant la restitution, l'application maintient une fenêtre glissante de lecture de la mémoire tampon, et, lorsque la lecture avance, l'application décale sa fenêtre et récupère le contenu dans la mémoire tampon de réception du dispositif client en libérant la partie correspondante de la mémoire tampon de réception.

On obtient ainsi une régulation relativement précise du flux.

Selon un mode de réalisation, la taille de la fenêtre glissante est déterminée à partir du débit d'encodage du contenu à restituer.

Ceci permet d'obtenir une meilleure régulation du flux.

Selon un mode de mise en oeuvre particulier, une interface entre l'application et la mémoire tampon de réception du dispositif client fournit du contenu à l'application, et ladite interface effectue des opérations de lecture dans la mémoire tampon de réception du dispositif client lorsque ladite fenêtre glissante de restitution se décale et permet la lecture de ladite mémoire tampon.

Ainsi, la régulation du flux est optimisée.

Selon un mode de mise en oeuvre particulier, le protocole de communication utilisant des fenêtres de réception est le protocole TCP (« *Transmission Control Protocol »*).

La présente invention se rapporte également à un dispositif mettant en oeuvre une application (par exemple de chargement et/ou de restitution de contenu) comprenant :
- des moyens pour publier, conformément à un protocole de communication utilisé pour la transmission desdites données du contenu vers le dispositif client, une taille de fenêtre de réception définissant la taille d'une partie d'une mémoire tampon de réception qui est disponible pour la réception de données;
- des moyens pour réceptionner des données du contenu dans la mémoire tampon de réception du dispositif client ;
- des moyens de transfert pour transférer des données du contenu réceptionnées dans la mémoire tampon de réception du dispositif client vers une mémoire tampon de l'application ;
caractérisé en ce que les moyens de transfert sont aptes à transférer au moins une partie des données du contenu de la mémoire tampon de réception du dispositif client vers la mémoire tampon de l'application sans libérer la partie correspondante de la mémoire tampon de réception.

Les caractéristiques optionnelles présentées ci-dessus en termes de procédé peuvent également s'appliquer à ce dispositif.

On comprendra mieux l'invention à l'aide de la description, faite ci-après à titre purement explicatif, d'un mode de réalisation de l'invention, en référence aux figures annexées :
- la Figure 1 illustre le procédé de communication selon la présente invention ;
- la Figure 2 représente le dispositif de communication selon la présente invention ;

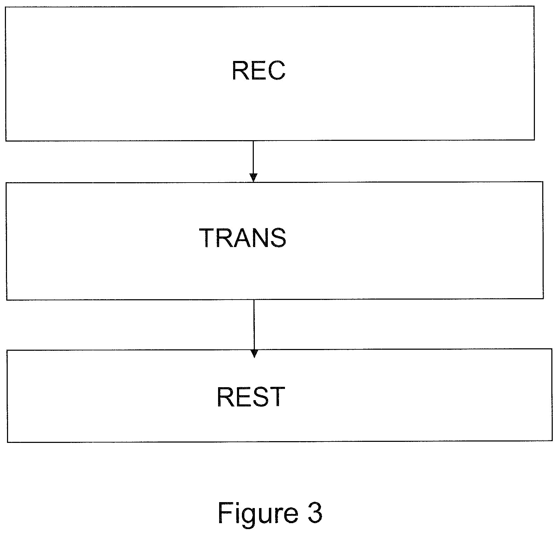

- la Figure 3 illustre un mode de réalisation du procédé selon la présente invention ; et
- les Figures 4a, 4b, 4c, 4d, 4e, 4f, 4g, 4h et 4i représentent les états de remplissage des mémoires tampons.

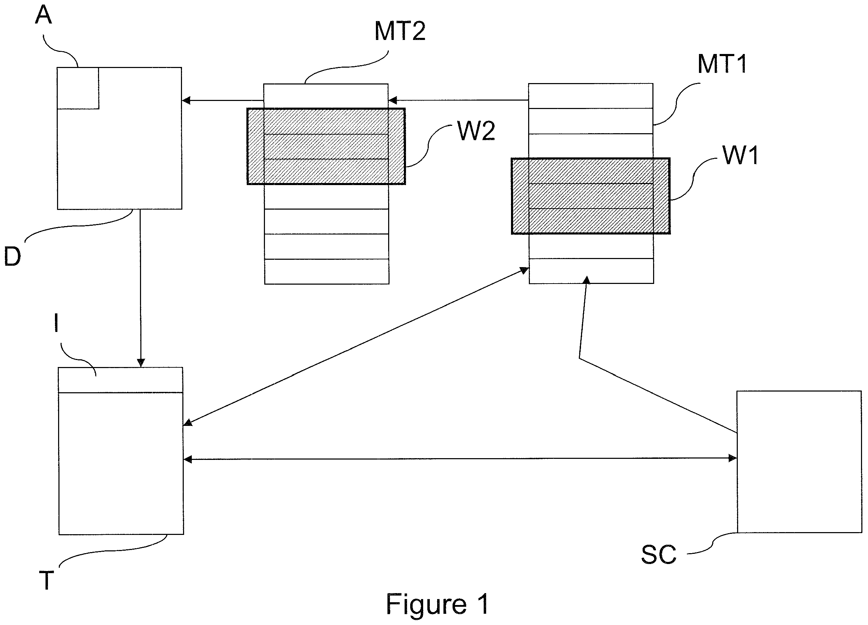

Sur la Figure 1 sont représentés un dispositif de communication D et un serveur de contenu SC reliés entre eux par un réseau de communication mettant en oeuvre le protocole TCP (« *Transmission Control Protocol »*). On notera que le protocole TCP est un exemple de protocole de communication, d'autres protocoles au niveau de la couche transport pouvant être utilisés.

Une application A est exécutée sur le dispositif client D.

Le dispositif client D comporte une mémoire tampon de réception TCP MT1. Une autre mémoire tampon MT2 est liée à l'application A. La fenêtre de réception de la mémoire tampon de réception MT1 est notée W1 et la fenêtre de restitution de la mémoire tampon MT2 est notée W2.

Une interface I et la couche TCP, notée T, du dispositif client D sont également représentées Figure 1.

Il est entendu que le dispositif de communication D peut être un ordinateur de type PC, ou éventuellement un dispositif portable comme par exemple un téléphone mobile ou bien un assistant personnel de type PDA.

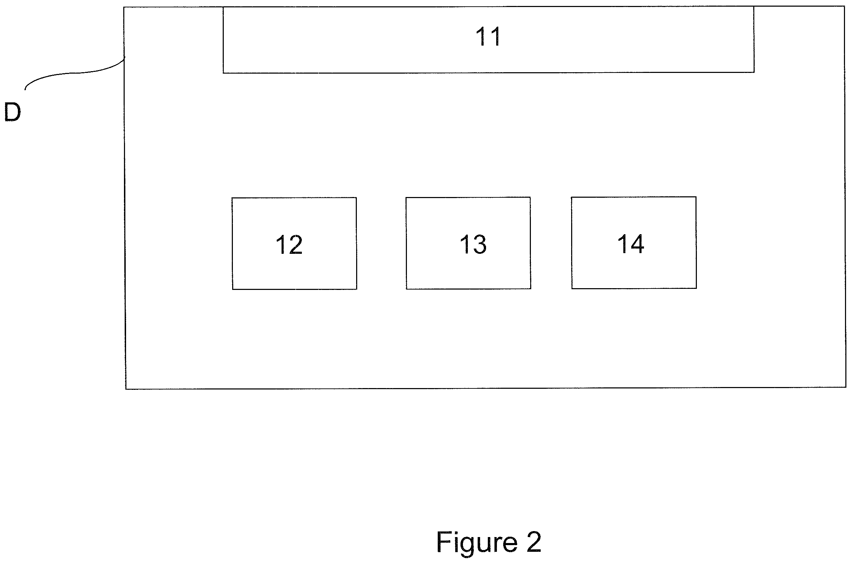

Le dispositif de communication est par exemple tel que représenté en Figure 2 et comprend alors une interface de communication 11, un processeur 12, une mémoire volatile 13 et une mémoire non volatile 14.

La présente invention s'applique notamment à tout réseau de type Internet utilisant le protocole TCP, par exemple des réseaux de type FTTH (fibre optique à domicile), ADSL ou des réseaux mobiles 3G.

Dans le cadre de la présente invention, un utilisateur choisit un contenu qu'il souhaite restituer (visualiser dans le cas d'un contenu vidéo et écouter dans le cas d'un contenu audio). L'application A lance alors un téléchargement depuis le serveur de contenu SC distant.

Ensuite, le serveur de contenu SC envoie du contenu vers le dispositif de communication D qu'utilise l'utilisateur. Le contenu est transmis sous forme de paquets TCP.

L'utilisation du protocole TCP pour la transmission des données du contenu implique que le dispositif client D publie, à destination du serveur SC émetteur de ce contenu, une taille de fenêtre de réception définissant la taille d'une partie de la mémoire tampon de réception qui est disponible (c'est-à-dire libre) pour la réception de données.

Les paquets TCP reçus sont enregistrés dans le dispositif de communication D utilisé par l'utilisateur dans la mémoire tampon MT1 de réception TCP, dans la partie de la mémoire tampon de réception qui est disponible pour la réception de données.

L'application A extrait les paquets dans la mémoire tampon MT1 de réception TCP dès leur arrivée et remplit la mémoire tampon MT2 avant de commencer la lecture.

Une fois que cette mémoire tampon MT2 est remplie, la lecture commence et la mémoire tampon MT2 continue de se remplir avec les paquets provenant de la mémoire tampon MT1 de réception TCP.

Dans la technique antérieure connue, l'application A transfère vers la mémoire tampon de l'application les paquets lorsqu'ils sont reçus dans la mémoire tampon MT1 de réception TCP en effectuant une opération de lecture (fonction « *read* »), ce qui a pour effet de libérer alors la partie correspondante de la mémoire tampon MT1 de réception TCP. En conséquence, la taille de la fenêtre de réception augmente suite à ce transfert, la taille de la fenêtre de réception étant augmentée de la quantité de données ainsi transférée.

Au contraire, dans l'invention, l'émission de données de contenu vers la mémoire tampon de réception est limitée dans une phase initiale par saturation de la mémoire tampon MT1 de réception TCP par l'application A qui lit le flux de données. Pour certaines des données au moins, cette lecture est réalisée sans libération de la partie correspondante de la mémoire tampon MT1 de réception, ce qui contribue à sa saturation.

Une fois le contenu de la mémoire tampon MT2 (liée à l'application A) initial transféré, le remplissage de la mémoire tampon MT1 de réception TCP sera contrôlé dans une deuxième phase, pendant laquelle s'effectue la restitution du contenu, en limitant les opérations de lecture *(*« *read* ») effectuées par l'application A dans cette mémoire tampon MT1 à une quantité de données effectivement consommées par l'application pendant une période donnée pour la restitution du contenu. Il est fait usage dans ce but de la fonction "*read*" qui libère la partie de mémoire lue de telle sorte que la taille de la fenêtre de réception W1 augmente seulement d'une certaine quantité: de nouvelles données peuvent donc être réceptionnées dans cette mémoire en remplacement des données lues. La couche TCP, dont la fonction est de réceptionner les données conformément au protocole TCP, du dispositif D publie ensuite des fenêtres de réception de plus en plus petites, ce qui limite les possibilités d'émission au niveau du serveur de contenu SC. Dans le contexte du protocole TCP, une fenêtre de réception définit une partie d'une mémoire tampon de réception qui est disponible pour le stockage de données reçues; la taille de cette fenêtre définit ainsi une quantité maximale de données susceptibles d'être enregistrées dans cette mémoire tampon de réception.

Le protocole TCP découpe le flux d'octets réceptionné en segments, dont la taille dépend de la MTU (« *Maximum Transmission Unit »*) du réseau sous-jacent (couche liaison de données).

Dans une connexion TCP, chaque partenaire dispose d'une mémoire tampon de réception. Le protocole TCP prévoit des mécanismes de contrôle de flux. Chaque segment TCP contient la taille disponible dans le tampon de réception de l'hôte qui l'a envoyé. La couche TCP du dispositif de réception publie des fenêtres de réception pour indiquer au dispositif émetteur s'il peut recevoir des paquets.

En d'autres termes, le niveau de remplissage de la mémoire tampon MT1 de réception TCP du dispositif client D est maintenu à une valeur telle que la taille de la fenêtre de réception TCP publiée par le dispositif client D est limitée à une valeur maximale.

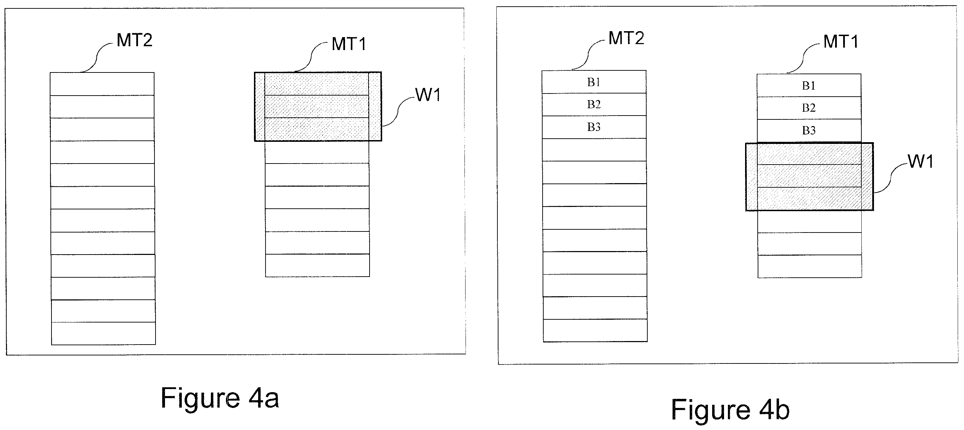

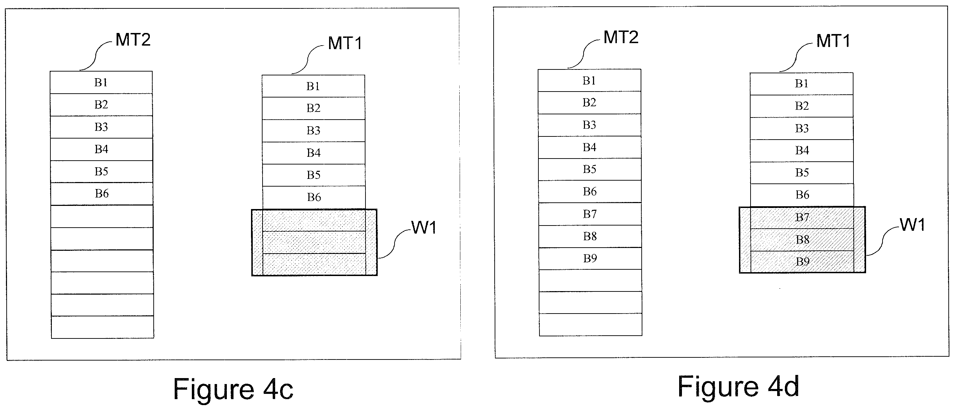

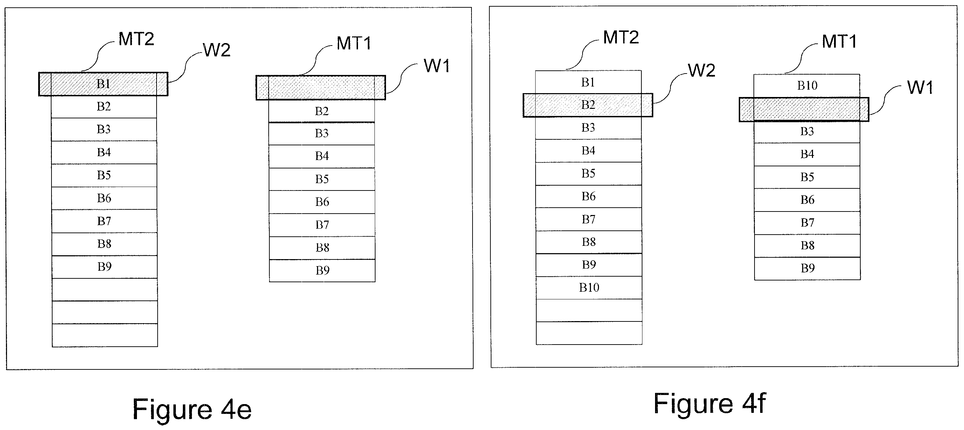

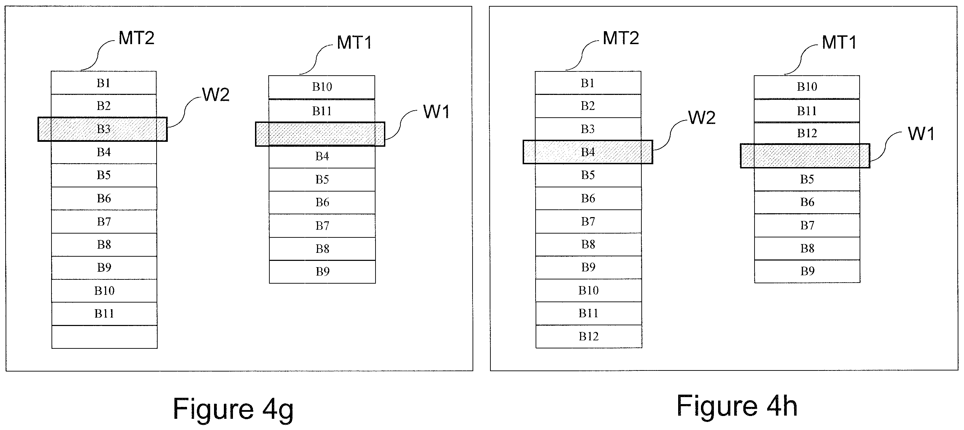

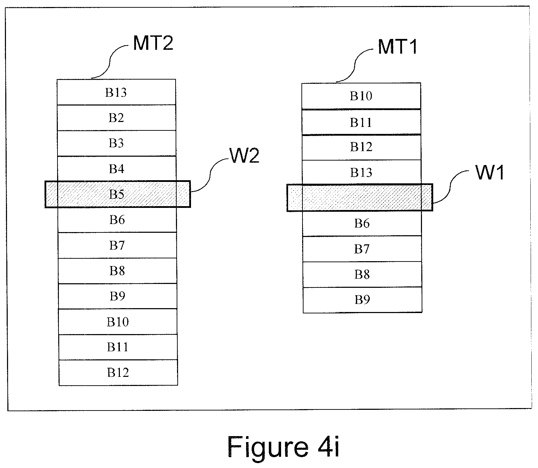

Les Figures 4a, 4b, 4c, 4d, 4e, 4f, 4g, 4h et 4i représentent les états de remplissage des mémoires tampons. Des blocs de données B1 à B12 sont représentés schématiquement sur ces figures.

Sur la Figure 4a, on voit les mémoires tampons de réception MT1 et de l'application MT2 vides.

Sur la Figure 4b, on voit que des données B1, B2 et B3 ont été téléchargées dans la mémoire tampon MT1 et que ces données ont été transférées dans la mémoire tampon MT2 (sans libération de la mémoire tampon MT1). La fenêtre de réception W1 de la mémoire de réception se décale.

Sur la Figure 4c, on voit que des données B4, B5 et B6 ont été téléchargées dans la mémoire tampon MT1 et que ces données ont été transférées dans la mémoire tampon MT2 (sans libération de la mémoire tampon MT1). La fenêtre de réception W1 de la mémoire de réception se décale.

Sur la Figure 4d, on voit que des données B7, B8 et B9 ont été téléchargées dans la mémoire tampon MT1 et que ces données ont été transférées dans la mémoire tampon MT2 (sans libération de la mémoire tampon MT1).

Sur la Figure 4e, on voit que la fenêtre de restitution W2 apparaît, que les données B1 sont restituées, et que la fenêtre de réception W1 est réduite du fait que la mémoire tampon MT1 est quasiment remplie et que seule une petite partie de la mémoire tampon MT1 (correspondant en l'occurrence aux données B1 précédemment stockées) a été libérée.

En particulier, la taille de la fenêtre de réception W1 est ajustée pour correspondre à la quantité de données (bloc de données B1) lue par l'application dans la mémoire tampon MT2 via la fenêtre de restitution W2 : les tailles des fenêtres W1 et W2 sont donc identiques. Ainsi, la quantité de données susceptible d'être réceptionnée dans cette mémoire tampon MT1 pendant une période donnée est limitée à la quantité de données effectivement consommée dans cette mémoire tampon MT1 par l'application pendant cette même période.

Ensuite, sur les Figures 4f, 4g, 4h et 4i, on voit que la position de la fenêtre de restitution se décale de bloc en bloc (B2 puis B3, puis B4 etc.), que les données B2, B3, B4, B5 sont restituées, que des données B10, B11, B12 sont téléchargées dans la mémoire tampon de réception MT1 et transférées vers la mémoire tampon de l'application MT2, et que la fenêtre de réception W1 reste réduite.

Le mécanisme selon la présente invention s'applique pour les réseaux dont le débit est très largement supérieur au débit de la vidéo.

Dans le cas d'un débit réseau supérieur (même légèrement) au débit d'encodage, l'information correspondant à la taille de fenêtre publiée réduira le débit TCP à celui de la vidéo (augmenté des en-têtes, ou *headers* des paquets).

Dans le cas où le débit réseau est inférieur au débit d'encodage de la vidéo, le mécanisme selon l'invention sera inhibé. Cette interruption du mécanisme entrera en jeu dès que l'occupation de la mémoire tampon MT1 de réception TCP est inférieure à une fraction prédéterminée, par exemple la moitié, de la taille maximale de la fenêtre de réception publiée (en général à l'initialisation de la connexion).

Le mécanisme selon la présente invention ne modifie pas la fenêtre de réception TCP, également appelée fenêtre de congestion (« *congestion window »*) de sorte que lorsque la fenêtre de réception TCP (fenêtre de congestion) s'ouvre (débit réseau inférieur au débit vidéo), le transfert reprend à son rythme nominal. Ainsi, si le débit réseau est temporairement perturbé, la récupération d'une mémoire tampon MT2 liée à l'application ne sera pas retardée par le procédé selon la présente invention. Le procédé reprendra lorsque la mémoire tampon MT2 liée à l'application A sera aussi remplie qu'initialement.

Selon un mode de réalisation de l'invention, le contenu de la mémoire tampon MT1 de réception TCP du dispositif client D est lu par l'application A sans libérer le contenu de la mémoire tampon MT1. L'interface de connexion ou selon l'appellation anglo-saxonne « *socket* » est lue sans libérer les données lues. Le paramètre *flagsp* lors de l'appel de la fonction *soreceive* contiendra le drapeau *MSG_PEEK.* Dans le protocole TCP, la fonction *soreceive* est une fonction de lecture de données d'une mémoire qui ne "libère" pas la partie de mémoire lue de telle sorte qu'aucune donnée ne peut être enregistrée dans cette mémoire en remplacement des données lues; en pratique, le pointeur de lecture indiquant la position du dernier octet lu n'est pas modifié. Ceci permet de conserver le mécanisme selon la présente invention tout en bénéficiant des données présentes dans la mémoire tampon MT1 de réception TCP. La mémoire tampon MT2 liée à l'application A voit sa taille ainsi augmentée. Les fenêtres de réception TCP sur les accès FTTH (« *Fiber To The Home* » ou fibre optique à domicile) supportent en général la mise à l'échelle de fenêtre (en anglais « *window scaling »),* ce qui augmentera sensiblement la taille de la mémoire tampon MT2 liée à l'application A.

La partie de la mémoire tampon de réception dans laquelle les données sont lues sans libérer cette partie de mémoire, sera libérée ultérieurement, de manière contrôlée, afin de maintenir une fenêtre W1 de taille réduite comme visible aux figures 4e à 4i.

Il est également possible de libérer tout ou partie de la fenêtre TCP lors de la lecture de la mémoire tampon. Il semble intéressant de conserver un mécanisme qui ne lit qu'un ou plusieurs (deux ou trois) multiples du MSS (« *Maximum Segment Size* ») dans la mémoire tampon MT1 de réception TCP pour que le débit TCP soit le plus lissé possible. En effet, la libération d'une grande partie de la mémoire tampon MT1 de réception TCP conduirait l'émetteur à envoyer une importante rafale (« *burst* ») de paquets, ce qui nuirait à la fois à la mémoire tampon MT2 liée à l'application A, au réseau et aux flux concurrents.

Selon un mode de réalisation de l'invention, la taille de la mémoire tampon MT2 de l'application A est comprise entre trois et dix secondes. Plus grande sera cette valeur, plus le délai avant de commencer la lecture sera long.

Dans un mode de réalisation de l'invention, l'application A transfère une partie de la taille de la mémoire tampon MT2 avant de commencer la lecture, puis, pendant la lecture, l'application A maintient une fenêtre glissante de la taille de la mémoire tampon MT2, et, lorsque la lecture avance, l'application A décale sa fenêtre et récupère le contenu dans la mémoire tampon MT1 de réception TCP du dispositif client D.

Dans un autre mode de réalisation, une interface logicielle I entre l'application A et la mémoire tampon MT1 de réception TCP du dispositif client D fournit du contenu à l'application A, et ladite interface I définit la taille de la fenêtre glissante de lecture à partir du débit d'encodage du contenu.

Par exemple, pour un débit d'encodage de 400 kb/s, on a :
64ko * 8 window scaling = 4096 et la taille de la mémoire tampon de l'application est de 10,24 secondes.

Selon un mode de mise en oeuvre, l'interface I effectue des opérations de lecture de données (« *read* ») dans la mémoire tampon MT1 de réception TCP du dispositif client D lorsque ladite fenêtre glissante de lecture se décale et permet la lecture de ladite mémoire tampon MT1.

La fonction *read* libère la partie de mémoire lue de telle sorte que de nouvelles données peuvent être enregistrées dans cette mémoire en remplacement des données lues, alors que la fonction *soreceive* est une fonction de lecture de données d'une mémoire qui ne "libère" pas la partie de mémoire lue de telle sorte qu'aucune donnée ne peut être enregistrée dans cette mémoire en remplacement des données lues.

Le procédé selon l'invention présenté ci-dessus est mis en oeuvre par la couche applicative. La couche TCP n'est pas modifiée et reste donc totalement cohérente avec les autres flux TCP.

Le mécanisme selon la présente invention bénéficie d'un débit lissé favorable à l'écoulement de flux de type « *streaming* ».

Le fait de forcer le changement de taille de la mémoire tampon MT1 de réception TCP et la possibilité de publier une fenêtre de réception TCP nulle pourrait induire des phénomènes appelés « *Silly Window Syndrom* »*.* Le protocole TCP pourrait constamment transmettre des paquets non remplis pour satisfaire une petite fenêtre du côté du dispositif client D (de taille inférieure au *MSS - Maximum Segment Size).*

Les mécanismes mis en oeuvre pour éviter ce problème au niveau du récepteur empêchent de publier une nouvelle taille de fenêtre inférieure à la fenêtre actuelle plus un MSS. Du côté de l'émetteur, la principale mesure consiste à n'émettre un paquet que s'il est complet. Les autres mesures permettent de communiquer avec des dispositifs qui publient toujours une fenêtre de petite taille, et empêchent d'envoyer des paquets de petite taille si l'application A effectue de petites opérations d'écriture (« *write* »).

Ces mécanismes peuvent être évités si l'on n'effectue que des opérations de lecture (« *read* ») de taille multiple du MSS.

Lorsque la taille de la fenêtre de réception TCP est nulle, l'émetteur des paquets lance un compteur appelé « *persist timer ».* A l'expiration de ce compteur, l'émetteur envoie un octet de données pour examiner si la fenêtre ne serait pas à nouveau non nulle mais pas publiée, par exemple en raison du *« Silly Window Syndrom avoidance algorithm* »*.* La valeur initiale (et minimale) de ce compteur est de cinq secondes. En mode de lecture, le mécanisme décrit ouvrira sa fenêtre d'émission d'au moins un MSS avant l'expiration de ce compteur. Et l'émetteur pourra émettre des paquets complets, et pas un paquet d'un octet pour sonder la fenêtre de réception.

L'invention est décrite dans ce qui précède à titre d'exemple. Différentes variantes de l'invention peuvent être envisagées sans pour autant sortir du cadre du brevet.

## Revendications

1. Procédé de chargement d'un contenu pour une application (A) mise en oeuvre par un dispositif client (D), comprenant les étapes suivantes :
• publication, conformément à un protocole de communication utilisé pour la transmission desdites données du contenu vers le dispositif client (D), d'une taille de fenêtre de réception définissant la taille d'une partie d'une mémoire tampon de réception qui est disponible pour la réception de données;
• réception de données du contenu dans la mémoire tampon (MT1) de réception du dispositif client (D) ;
• transfert de données du contenu réceptionnées dans la mémoire tampon (MT1) de réception du dispositif client (D) vers une mémoire tampon (MT2) de l'application (A) ;
**caractérisé en ce qu'**au moins une partie des données du contenu de la mémoire tampon (MT1) de réception du dispositif client (D) est transférée vers la mémoire tampon (MT2) de l'application (A) sans libérer la partie correspondante de la mémoire tampon (MT1) de réception.

2. Procédé de chargement selon la revendication 1, comprenant en outre une étape de restitution du contenu par l'application (A) ;
et dans lequel, pendant la restitution, la taille de la fenêtre de réception publiée reste inférieure à un seuil prédéterminé.

3. Procédé de chargement selon la revendication 1, comprenant en outre une étape de restitution du contenu par l'application (A) ;
et dans lequel :
- avant de commencer la restitution, l'application (A) remplit une fraction prédéterminée de la mémoire tampon de l'application (MT2) avec des données de la mémoire tampon (MT1) de réception sans libérer la partie correspondante de la mémoire tampon (MT1) de réception,
- puis, pendant la restitution, l'application (A) maintient une fenêtre glissante de lecture de la mémoire tampon (MT1), et, lorsque la lecture avance, l'application (A) décale sa fenêtre et récupère le contenu dans la mémoire tampon (MT1) de réception du dispositif client (D) en libérant la partie correspondante de la mémoire tampon (MT1) de réception.

4. Procédé de chargement selon la revendication 3, dans lequel la taille de la fenêtre glissante est déterminée à partir du débit d'encodage du contenu à restituer.

5. Procédé de chargement selon l'une des revendications 3 ou 4, dans lequel une interface (I) entre l'application (A) et la mémoire tampon (MT1) de réception du dispositif client (D) fournit du contenu à l'application (A), et dans lequel ladite interface (I) effectue des opérations de lecture dans la mémoire tampon (MT1) de réception du dispositif client (D) lorsque ladite fenêtre glissante de restitution se décale et permet la lecture de ladite mémoire tampon (MT1).

6. Procédé de chargement selon l'une au moins des revendications précédentes, dans lequel le protocole de communication utilisant des fenêtres de réception est le protocole TCP (« *Transmission Control Protocol* »).

7. Dispositif (D) mettant en oeuvre une application comprenant :
• des moyens pour publier, conformément à un protocole de communication utilisé pour la transmission desdites données du contenu vers le dispositif client (D), une taille de fenêtre de réception définissant la taille d'une partie d'une mémoire tampon de réception qui est disponible pour la réception de données;
• des moyens pour réceptionner des données du contenu dans la mémoire tampon (MT1) de réception du dispositif client (D) ;
• des moyens de transfert pour transférer des données du contenu réceptionnées dans la mémoire tampon (MT1) de réception du dispositif client (D) vers une mémoire tampon (MT2) de l'application (A) ;
**caractérisé en ce que** les moyens de transfert sont aptes à transférer au moins une partie des données du contenu de la mémoire tampon (MT1) de réception du dispositif client (D) vers la mémoire tampon (MT2) de l'application (A) sans libérer la partie correspondante de la mémoire tampon (MT1) de réception.

8. Dispositif selon la revendication 7, comprenant en outre :
- des moyens de restitution du contenu par l'application (A) ; et
- des moyens pour maintenir la taille de la fenêtre de réception publiée inférieure à un seuil prédéterminé pendant la restitution.

9. Dispositif selon la revendication 7, comprenant en outre :
- des moyens de restitution du contenu par l'application (A) ;
- des moyens pour remplir, avant de commencer la restitution, une fraction prédéterminée de la mémoire tampon de l'application (MT2) avec des données de la mémoire tampon (MT1) de réception sans libérer la partie correspondante de la mémoire tampon (MT1) de réception,
- des moyens pour maintenir, pendant la restitution, une fenêtre glissante de lecture de la mémoire tampon (MT1), et pour décaler, lorsque la lecture avance la fenêtre de l'application et récupérer du contenu dans la mémoire tampon (MT1) de réception du dispositif client (D) en libérant la partie correspondante de la mémoire tampon (MT1) de réception.

10. Dispositif selon la revendication 9, comprenant des moyens de détermination de la taille de la fenêtre glissante à partir du débit d'encodage du contenu à restituer.

11. Dispositif selon la revendication 9 ou 10, comprenant une interface (I) entre l'application (A) et la mémoire tampon (MT1) de réception du dispositif client (D) pour fournir du contenu à l'application (A) et pour effectuer des opérations de lecture dans la mémoire tampon (MT1) de réception du dispositif client (D) lorsque ladite fenêtre glissante de restitution se décale et permet la lecture de ladite mémoire tampon (MT1).

12. Dispositif selon l'une des revendications 7 à 11, dans lequel le protocole de communication utilisant des fenêtres de réception est le protocole TCP (« *Transmission Control Protocol* »).

## Patentansprüche

1. Verfahren zum Laden eines Inhalts für eine Anwendung (A), die von einer Client-Vorrichtung (D) ausgeführt wird, umfassend die folgenden Schritte:
- Veröffentlichung, gemäß einem Kommunikationsprotokoll, das für die Übertragung der Daten des Inhalts zu einer Client-Vorrichtung (D) verwendet wird, einer Größe eines Empfangsfensters, das die Größe eines Teils eines Empfangspufferspeichers definiert, der für den Datenempfang verfügbar ist;
- Empfang von Daten des Inhalts in dem Empfangspufferspeicher (MT1) der Client-Vorrichtung (D);
- Transfer von Daten des Inhalts, die in dem Empfangspufferspeicher (MT1) der Client-Vorrichtung (D) empfangen werden, zu einem Pufferspeicher (MT2) der Anwendung (A);
**dadurch gekennzeichnet, dass** mindestens ein Teil der Daten des Inhalts des Empfangspufferspeichers (MT1) der Client-Vorrichtung (D) zu dem Pufferspeicher (MT2) der Anwendung (A) transferiert wird, ohne den entsprechenden Teil des Empfangspufferspeichers (MT1) freizugeben.

2. Ladeverfahren nach Anspruch 1,
ferner umfassend einen Schritt der Wiedergabe des Inhalts durch die Anwendung (A);
und wobei, während der Wiedergabe, die veröffentlichte Größe des Empfangsfensters kleiner als eine vorherbestimmte Schwelle bleibt.

3. Ladeverfahren nach Anspruch 1,
ferner umfassend einen Schritt der Wiedergabe des Inhalts durch die Anwendung (A);
und wobei:
- vor dem Beginn der Wiedergabe, die Anwendung (A) eine vorherbestimmte Fraktion des Pufferspeichers (MT2) der Anwendung mit Daten des Empfangspufferspeichers (MT1) füllt, ohne den entsprechenden Teil des Empfangspufferspeichers (MT1) freizugeben,
- anschließend, während der Wiedergabe, die Anwendung (A) ein gleitendes Lesefenster des Pufferspeichers (MT1) aufrechterhält, und, wenn sich das Lesen fortsetzt, die Anwendung (A) ihr Fenster verschiebt und den Inhalt in dem Empfangspufferspeicher (MT1) der Client-Vorrichtung (D) zurückgewinnt, wobei der entsprechende Teil des Empfangspufferspeichers (MT1) freigegeben wird.

4. Ladeverfahren nach Anspruch 3,
wobei die Größe des gleitenden Fensters aus der Codierungsbitrate des wiederzugebenden Inhalts bestimmt wird.

5. Ladeverfahren nach einem der Ansprüche 3 oder 4, wobei eine Schnittstelle (I) zwischen der Anwendung (A) und dem Empfangspufferspeicher (MT1) der Client-Vorrichtung (D) Inhalt an die Anwendung (A) liefert, und wobei die Schnittstelle (I) Leseoperationen in dem Empfangspufferspeicher (MT1) der Client-Vorrichtung (D) ausführt, wenn sich das gleitende Wiedergabefenster verschiebt und das Lesen des Pufferspeichers (MT1) gestattet.

6. Ladeverfahren nach mindestens einem der vorhergehenden Ansprüche,
wobei das Kommunikationsprotokoll, das die Empfangsfenster verwendet, das TCP-Protokoll ("Transmission Control Protocol") ist.

7. Vorrichtung (D), welche eine Anwendung ausführt, umfassend:
- Mittel für die Veröffentlichung, gemäß einem Kommunikationsprotokoll, das für die Übertragung der Daten des Inhalts zu der Client-Vorrichtung (D) verwendet wird, einer Größe eines Empfangsfensters, das die Größe eines Teils eines Empfangspufferspeichers definiert, der für den Datenempfang verfügbar ist;
- Mittel für den Empfang von Daten des Inhalts in dem Empfangspufferspeicher (MT1) der Client-Vorrichtung (D);
- Transfermittel für den Transfer von Daten des Inhalts, die in dem Empfangspufferspeicher (MT1) der Client-Vorrichtung (D) empfangen werden, zu einem Pufferspeicher (MT2) der Anwendung (A);
**dadurch gekennzeichnet, dass** die Transfermittel geeignet sind, mindestens einen Teil der Daten des Inhalts des Empfangspufferspeichers (MT1) der Client-Vorrichtung (D) zu dem Pufferspeicher (MT2) der Anwendung (A) zu transferieren, ohne den entsprechenden Teil des Empfangspufferspeichers (MT1) freizugeben.

8. Vorrichtung nach Anspruch 7,
ferner umfassend:
- Mittel für die Wiedergabe des Inhalts durch die Anwendung (A); und
- Mittel für das Halten der veröffentlichten Größe des Empfangsfensters unter einer vorherbestimmten Schwelle während der Wiedergabe.

9. Vorrichtung nach Anspruch 7,
ferner umfassend:
- Mittel für die Wiedergabe des Inhalts durch die Anwendung (A);
- Mittel für das Füllen, vor dem Beginn der Wiedergabe, einer vorherbestimmten Fraktion des Pufferspeichers (MT2) der Anwendung mit Daten des Empfangspufferspeichers (MT1), ohne den entsprechenden Teil des Empfangspufferspeichers (MT1) freizugeben;
- Mittel für das Halten, während der Wiedergabe, eines gleitenden Lesefensters des Pufferspeichers (MT1), und für das Verschieben, wenn sich das Lesen fortsetzt, des Fensters der Anwendung und für das Rückgewinnen des Inhalts in dem Empfangspufferspeicher (MT1) der Client-Vorrichtung (D), wobei der entsprechende Teil des Empfangspufferspeichers (MT1) freigegeben wird.

10. Vorrichtung nach Anspruch 9,
umfassend Mittel zur Bestimmung der Größe des gleitenden Fensters aus der Codierungsbitrate des wiederzugebenden Inhalts.

11. Vorrichtung nach Anspruch 9 oder 10,
umfassend eine Schnittstelle (I) zwischen der Anwendung (A) und dem Empfangspufferspeicher (MT1) der Client-Vorrichtung (D), um Inhalt an die Anwendung (A) zu liefern, und um Leseoperationen in dem Empfangspufferspeicher (MT1) der Client-Vorrichtung (D) auszuführen, wenn sich das gleitende Wiedergabefenster verschiebt und das Lesen des Pufferspeichers (MT1) gestattet.

12. Vorrichtung nach einem der Ansprüche 7 bis 11,
wobei das Kommunikationsprotokoll, das die Empfangsfenster verwendet, das TCP-Protokoll ("Transmission Control Protocol") ist.

## Claims

1. Method for loading a content for an application (A) implemented by a client device (D), comprising the following steps:
• publishing, in accordance with a communication protocol used to transmit said data of the content to the client device (D), a reception window size defining the size of part of a receive buffer memory that is available for receiving data;
• receiving data of the content in the receive buffer memory (MT1) of the client device (D);
• transferring data of the content received in the receive buffer memory (MT1) of the client device (D) to a buffer memory (MT2) of the application (A) ;
**characterized in that** at least part of the data of the content of the receive buffer memory (MT1) of the client device (D) is transferred to the buffer memory (MT2) of the application (A) without freeing the corresponding part of the receive buffer memory (MT1).

2. Loading method according to Claim 1, furthermore comprising a step of playing back the content by the application (A);
and wherein, during the playback, the size of the published reception window remains smaller than a predetermined threshold.

3. Loading method according to Claim 1, furthermore comprising a step of playing back the content by the application (A);
and wherein:
- before beginning the playback, the application (A) fills a predetermined fraction of the buffer memory of the application (MT2) with data from the receive buffer memory (MT1) without freeing the corresponding part of the receive buffer memory (MT1),
- then, during the playback, the application (A) maintains a sliding reading window of the buffer memory (MT1), and, when the reading progresses, the application (A) shifts its window and recovers the content in the receive buffer memory (MT1) of the client device (D) while freeing the corresponding part of the receive buffer memory (MT1).

4. Loading method according to Claim 3, wherein the size of the sliding window is determined on the basis of the encoding bit rate of the content to be played back.

5. Loading method according to either of Claims 3 and 4, wherein an interface (I) between the application (A) and the receive buffer memory (MT1) of the client device (D) provides content to the application (A), and wherein said interface (I) performs read operations in the receive buffer memory (MT1) of the client device (D) when said sliding playback window shifts and enables said buffer memory (MT1) to be read.

6. Loading method according to at least one of the preceding claims, wherein the communication protocol using reception windows is the TCP protocol ("*Transmission Control Protocol"*).

7. Device (D) implementing an application comprising:
• means for publishing, in accordance with a communication protocol used to transmit said data of the content to the client device (D), a reception window size defining the size of part of a receive buffer memory that is available for receiving data;
• means for receiving data of the content in the receive buffer memory (MT1) of the client device (D) ;
• transfer means for transferring data of the content received in the receive buffer memory (MT1) of the client device (D) to a buffer memory (MT2) of the application (A);
**characterized in that** the transfer means are able to transfer at least part of the data of the content of the receive buffer memory (MT1) of the client device (D) to the buffer memory (MT2) of the application (A) without freeing the corresponding part of the receive buffer memory (MT1).

8. Device according to Claim 7, furthermore comprising:
- means for playing back the content by the application (A); and
- means for keeping the size of the published reception window smaller than a predetermined threshold during the playback.

9. Device according to Claim 7, furthermore comprising:
- means for playing back the content by the application (A);
- means for filling, before beginning the playback, a predetermined fraction of the buffer memory of the application (MT2) with data from the receive buffer memory (MT1) without freeing the corresponding part of the receive buffer memory (MT1),
- means for maintaining, during the playback, a sliding reading window of the buffer memory (MT1), and for shifting, when the reading progresses, the window of the application and recovering content in the receive buffer memory (MT1) of the client device (D) while freeing the corresponding part of the receive buffer memory (MT1).

10. Device according to Claim 9, comprising means for determining the size of the sliding window on the basis of the encoding bit rate of the content to be played back.

11. Device according to Claim 9 or 10, comprising an interface (I) between the application (A) and the receive buffer memory (MT1) of the client device (D) for providing content to the application (A) and for performing read operations in the receive buffer memory (MT1) of the client device (D) when said sliding playback window shifts and enables said buffer memory (MT1) to be read.

12. Device according to one of Claims 7 to 11, wherein the communication protocol using reception windows is the TCP protocol ("*transmission Control Protocol").*
